# FASCICULE DE BREVET EUROPEEN

(11) **EP 0 544 376 B1**
(45) Date de publication et mention de la délivrance du brevet: **24.07.1996**
(21) Numéro de dépôt: 92203623.1
(22) Date de dépôt: 24.11.1992
(51) Int. Cl.: F16B 37/04, F16B 37/02

(54) **Attache de fixation d'une pièce munie d'une tige sur une paroi**
Befestigungselement, von einem mit Schaft versehenen Stück, auf einer Wand
Fastener for a piece having a shaft on wall

(30) Priorité: 25.11.1991 FR 9114503
(43) Date de publication de la demande: 02.06.1993
(73) Titulaire: RAPID S.A., F-75017 Paris (FR)
(72) Inventeur: Leon, Jean-Pierre René, F-78800 Houilles (FR)
(74) Mandataire: Durand, Yves Armand Louis

(56) Documents cités:
- GB-A- 907 899
- US-A- 2 913 950
- US-A- 3 426 817
- US-A- 5 036 674

## Description

La présente invention a essentiellement pour objet un dispositif de fixation d'une pièce quelconque munie d'une tige sur une paroi.

Lorsqu'on désire fixer une pièce, telle que par exemple une plaque ou un écusson, sur une paroi telle qu'une tôle faisant partie de la carrosserie d'un véhicule, on fait passer la tige initialement solidaire de la pièce au travers d'un orifice ménagé dans la tôle, et, de l'autre côté de la tôle, on procède à la fixation au moyen d'un système quelconque tel que écrou, clip ou analogue.

Une telle fixation présente un certain nombre d'inconvénients. Tout d'abord, pour procéder à la fixation, les deux côtés ou faces de la tôle doivent être accessibles. En outre, la fixation exige une certaine dextérité de la part de l'opérateur, et elle ne peut pas être effectuée très rapidement notamment en raison des manoeuvres de tâtonnement qu'il convient de faire. A cela, il faut ajouter qu'une telle fixation pose des problèmes de corrosion dus aux pièces métalliques en contact direct.

Par ailleurs, on connaît d'après le document US-A-3 426 817 une attache de fixation correspondant au préambule de la revendication 1.

La présente invention a pour but de proposer une attache remédiant notamment aux inconvénients ci-dessus.

A cet effet, l'invention a pour objet une attache de fixation sur une paroi d'une pièce munie d'une tige traversant un orifice ménagé dans ladite paroi, cette attache comprenant un organe en forme de fût qui comporte des languettes élastiquement déformables clippées dans l'orifice de la paroi et une embase munie d'un élément de fixation de la tige de la pièce, caractérisée en ce que l'élément de fixation est constitué par une rondelle avec griffes permettant l'accrochage de la tige et logée dans une cuvette formée dans l'embase, et en ce que les languettes possèdent une épaisseur allant en s'accroissant depuis l'embase jusqu'à sensiblement leur extrémité libre pour permettre le verrouillage de la rondelle dans la cuvette lorsque l'organe en forme de fût est clippé par les languettes dans l'orifice de la paroi.

On ajoutera encore ici que la face interne de chaque languette comporte au moins une nervure s'étendant suivant sensiblement l'axe de l'organe en forme de fût, de sorte que l'élément de fixation demeurera positivement maintenu sur l'embase lorsque le fût est au repos, c'est-à-dire non clippé dans l'orifice de la paroi.

Suivant encore une autre caractéristique de l'invention, l'extrémité libre de chaque languette comporte une gorge extérieure et un chanfrein intérieur.

On précisera encore ici que la périphérie externe de la rondelle forme une cheminée de faible hauteur s'étendant du côté de la partie supérieure ouverte de l'organe en forme de fût.

Suivant encore une autre caractéristique de cette attache, la cuvette formée dans l'embase est munie d'un orifice axial débouchant ou non vers l'extérieur de l'organe en forme de fût.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue extérieure et en élévation suivant la flèche I de la figure 3 d'une attache conforme à l'invention.

La figure 2 est une vue en coupe axiale de cette attache, suivant la ligne II-II de la figure 3.

La figure 3 est une vue de dessus de l'attache suivant la flèche III de la figure 2.

La figure 4 est une vue en coupe axiale de l'attache en position clippée sur une paroi et grâce à laquelle est fixée une pièce munie d'une tige et constituant par exemple un écusson à fixer sur la carrosserie d'un véhicule automobile.

En se reportant aux dessins, on voit qu'une attache de fixation selon cette invention, et suivant un exemple de réalisation, est essentiellement constituée par un organe allongé en matière plastique, intérieurement creux et présentant sensiblement la forme d'un fût 1 dans le fond duquel est logé un élément de fixation 2 qui est de préférence métallique.

Comme on le voit bien sur la figure 4, le fût 1 peut être clippé par sa partie supérieure ouverte dans l'orifice 0 d'une paroi P sur laquelle doit être fixée une pièce quelconque, telle que par exemple un écusson E muni d'une tige T susceptible de pénétrer dans le fût 1. La paroi P peut être par exemple une tôle appartenant à la carrosserie d'un véhicule automobile.

Le fût 1 comporte une embase 3 formant à sa partie supérieure une cuvette 4 recevant l'élément de fixation 2.

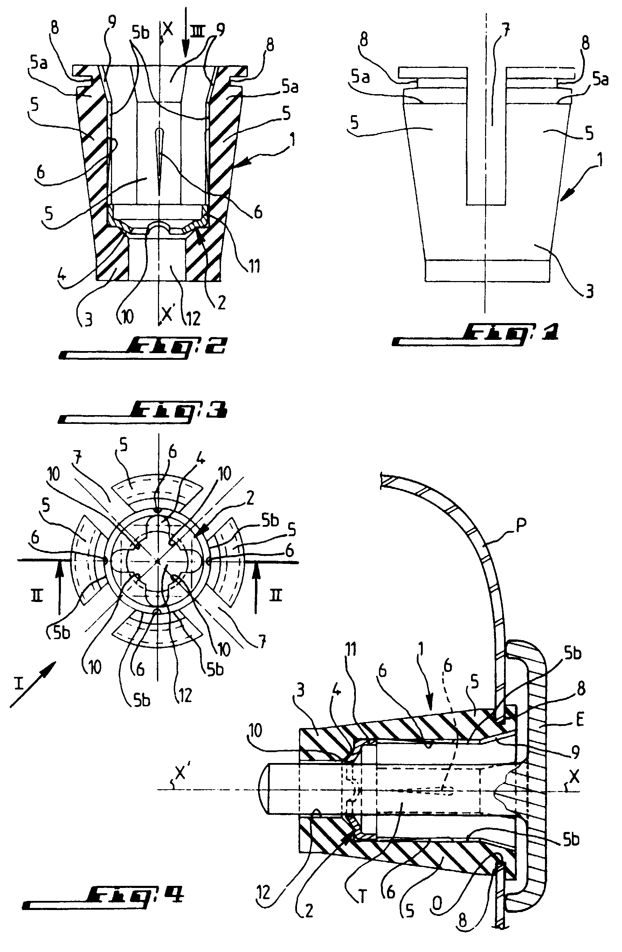

Au-dessus de l'embase 3, et intégralement à celle-ci, sont prévues des languettes élastiquement et radialement déformables 5, ces languettes étant au nombre de quatre suivant l'exemple de réalisation représenté, comme on le voit bien sur la figure 3.

Comme il apparaît clairement sur les figures 2 et 4, les languettes 5 possèdent une épaisseur allant en s'accroissant depuis l'embase 3 où elles prennent naissance jusqu'à sensiblement leur extrémité libre 5a. Le rôle de l'épaisseur croissante des languettes sera expliqué plus loin à propos du fonctionnement.

En outre, comme on le voit bien sur les figures 2 à 4, la face interne 5b de chaque languette 5 comporte une nervure 6 qui s'étend suivant sensiblement l'axe X-X' du fût 1. La fonction de ces nervures 6 sera expliquée ultérieurement à propos du fonctionnement et du montage de l'attache.

Les languettes 5, séparées l'une de l'autre suivant un certain intervalle 7, comportent chacune, au niveau de leur extrémité libre 5a une gorge extérieure 8 permettant le clippage du fût 1 sur la paroi P. Au niveau de leur extrémité libre 5a, les languettes 5 comportent encore un chanfrein intérieur repéré en 9 sur les figures 2 et 4.

L'élément de fixation 2 logé au fond du fût 1 dans la cuvette 4 formée dans l'embase 3 est, suivant l'exemple de réalisation représenté, constitué par une rondelle avec griffes 10 susceptible de coopérer par accrochage avec la tige T de la pièce ou écusson E lorsqu'elle a traversé ladite rondelle.

On voit encore sur les figures 3 et 4 que l'élément de fixation ou rondelle 2 comporte à sa périphérie une cheminée 11 de faible hauteur et améliorant en quelque sorte l'assise de la rondelle 2 dans la cuvette 4 de l'embase 3.

Cette embase 3 avec cuvette 4 est munie d'un orifice axial et débouchant 12, comme on le voit bien notamment sur les figures 2 et 4.

Toutefois, cet orifice axial 12 peut, sans sortir du cadre de l'invention ne pas être débouchant vers l'extérieur, c'est-à-dire être obturé tout en s'étendant malgré tout suivant une certaine longueur dans la direction axiale pour permettre la réception de la tige T de la pièce E, lorsque ladite tige a traversé et est accrochée sur la rondelle 2 logée dans la cuvette 4 de l'embase 3.

Mais, pour une meilleure compréhension de l'invention, on expliquera ci-après le fonctionnement de l'attache qui vient d'être décrite ainsi que la fixation de la pièce ou écusson E sur la paroi P à l'aide de cette attache.

Il convient tout d'abord d'observer que lorsque l'attache en forme de fût 1 est au repos, c'est-à-dire encore non clippée sur la paroi P, la rondelle 2 ne peut pas s'échapper de la cuvette 4 de l'embase 3 grâce aux nervures 6 sur les languettes 5. L'ensemble fût 1-rondelle 2 demeure par conséquent unitaire.

Le fût 1 est alors inséré dans l'orifice 0 de la paroi P, et ce par déformation radiale des languettes 5 en direction de l'axe X-X', jusqu'à ce que la gorge 8 desdites languettes se clippe dans l'orifice 0, comme on le voit clairement sur la figure 4.

La tige T de l'écusson E est alors enfoncée à force au travers de la rondelle métallique 2, les griffes 10 de cette rondelle s'accrochant sur ladite tige, de sorte que l'écusson E sera solidement appliqué et fixé sur la paroi P et cela sans qu'un arrachement soit possible grâce aux griffes 10 de la rondelle 2. Il est important de noter ici que la rondelle 2 elle-même ne pourra pas sortir de la cuvette 4 de l'embase 3 sous l'effet d'une traction exercée sur l'écusson E et donc sur la tige T, en raison non seulement des nervures 6, mais surtout de l'épaisseur 3 croissante des languettes 5 depuis l'embase 3 jusque vers leur extrémité libre 5a. Autrement dit, en position clippée sur la paroi P, le fût 1 possède une ouverture intérieure allant en se rétrécissant depuis la cuvette 4 de l'embase 3 jusqu'à l'extrémité libre des languettes élastiques 5, ce qui réalise en quelque sorte le verrouillage de la rondelle 2 dans la cuvette 4 de l'embase 3, ce verrouillage ne pouvant d'ailleurs aller qu'en s'accentuant dans le cas où la rondelle 2 tendrait à s'échapper de la cuvette 4.

Sur la figure 4, on voit que l'extrémité libre de la tige T débouche vers l'extérieur du fût 1 après passage au travers de l'orifice axial et débouchant 12 prévu dans l'embase 3. Mais, comme expliqué précédemment, la tige T peut être d'une longueur telle qu'elle pénètre certes dans l'orifice 12 mais sans déboucher vers l'extérieur, de sorte que ledit orifice 12 peut être obturé, la rondelle métallique 2 étant alors logée dans une cage étanche constituée par le fût 1.

On a donc réalisé suivant l'invention une attache de fixation qui peut être fixée par clippage d'un seul côté ou par une seule face de la paroi P, qui permet la fixation d'une pièce ou écusson E avec tige T encore une fois d'un seul côté de la paroi P, et qui non seulement assure une fixation par la rondelle 2 en un point relativement éloigné de ladite paroi P, mais évite avantageusement tout problème de corrosion, phénomène fréquent avec les fixations réalisées sur les véhicules automobiles.

L'invention n'est nullement limitée au mode de réalisation décrit et illustré qui n'a été donné qu'à titre d'exemple.

C'est ainsi que la forme de la pièce E à fixer peut être quelconque, de même que le fût 1 peut être en un matériau élastomère quelconque, et que la rondelle 2 peut revêtir une forme appropriée quelconque pour assurer la fixation de la pièce E.

## Revendications

1. Attache de fixation sur une paroi (P) d'une pièce (E) munie d'une tige (T) traversant un orifice (O) ménagé dans ladite paroi, cette attache comprenant un organe en forme de fût (1) qui comporte des languettes élastiquement déformables (5) clippées dans l'orifice (O) de la paroi (P) et une embase (3) munie d'un élément (2) de fixation de la tige (T) de la pièce (E), caractérisée en ce que l'élément de fixation (2) est constitué par une rondelle avec griffes (10) permettant l'accrochage de la tige (T) et logée dans une cuvette (4) formée dans l'embase (3), et en ce que les languettes (5) possèdent une épaisseur allant en s'accroissant depuis l'embase (3) jusqu'à sensiblement leur extrémité libre (5a) pour permettre le verrouillage de la rondelle dans la cuvette (4) lorsque l'organe en forme de fût (1) est clippé par les languettes (5) dans l'orifice (O) de la paroi (P).

2. Attache selon la revendication 1, caractérisée en ce que la face interne (5b) de chaque languette (5) comporte au moins une nervure (6) s'étendant suivant sensiblement l'axe (X-X') de l'organe en forme de fût (1).

3. Attache selon la revendication 1 ou 2, caractérisée en ce que l'extrémité libre (5a) de chaque languette (5) comporte une gorge extérieure (8) et un chanfrein intérieur (9).

4. Attache selon l'une des revendications précédentes, caractérisée en ce que la périphérie externe de la rondelle forme une cheminée (11) de faible hauteur s'étendant du coté de la partie supérieure ouverte de l'organe en forme de fût (1).

5. Attache selon l'une des revendications précédentes, caractérisée en ce que la cuvette (4) formée dans l'embase (3) est munie d'un orifice axial (12) débouchant ou non vers l'extérieur de l'organe en forme fût (1).

## Patentansprüche

1. Halterung zur Befestigung, an einer Wand (P), eines mit einem eine in der besagten Wand gebildete Öffnung (O) durchsetzenden Stift (T) versehenen Stückes (E), wobei diese Halterung ein schaftförmiges Glied (1) aufweist, welches in der Öffnung (O) der Wand (P) eingeklemmte elastisch verformbare Zungen (5) und einen mit einem Element (2) zur Befestigung des Stiftes (T) des Stückes (E) versehenen Endteil (3) aufweist, dadurch gekennzeichnet, dass das Befestigungselement (2) durch eine in einer in dem Endteil (3) gebildeten Pfanne (4) untergebrachte Lochscheibe mit das Anhaken des Stiftes (T) gestattenden Klauen (10) gebildet wird und dass die Zungen (5) eine von dem Endteil (3) aus bis etwa ihrem freien Ende (5a) zunehmende Dicke besitzen, um die Verriegelung der Lochscheibe in der Pfanne (4) zu gestatten, wenn das schaftförmige Glied (1) durch die Zungen (5) in der Öffnung (O) der Wand (P) eingeklemmt ist.

2. Halterung nach Anspruch 1, dadurch gekennzeichnet, dass die Innenfläche (5b) jeder Zunge (5) wenigstens eine sich etwa entlang der Achse (X-X') des schaftförmigen Gliedes (1) erstreckende Nut (6) aufweist.

3. Halterung nach Anspruch 1 oder 2, dadurch gekennzeichnet, dass das freie Ende (5a) jeder Zunge (5) eine äussere Ringnut (8) und eine innere Abfasung (9) aufweist.

4. Halterung nach einem der vorangehenden Ansprüche, dadurch gekennzeichnet, dass der Aussenumfang der Lochscheibe einen sich zum offenen oberen Teil des schaftförmigen Gliedes (1) hin erstreckenden Schacht (11) schwacher Höhe bildet.

5. Halterung nach einem der vorangehenden Ansprüche, dadurch gekennzeichnet, dass die in dem Endteil (3) gebildete Pfanne mit einer nach aussen oder nicht nach aussen des schaftförmigen Gliedes (1) ausmündenden Axialöffnung (12) versehen ist.

## Claims

1. Attachment fitting for the fastening, onto a wall (P), of a part (E) provided with a pin (T) extending through an opening (O) formed in the said wall, this attachment fitting comprising a shank-shaped member (1) which comprises elastically deformable tongues (5) clipped into the opening (O) of the wall (P) and an end portion (3) provided with an element (2) for the fastening of the pin (T) of the part (E), characterized in that the fastening element (2) is constituted by a washer with claws (10) permetting the hooking of the pin (T) and accommodated in a cup (4) formed in the end portion (3) and in that the tongues (5) have a thickness increasing from the end portion (3) substantially to their free end (5a) to permit the locking of the washer in the cup (4) when the shank-shaped member (1) is clipped by the tongues (5) into the opening (O) of the wall (P).

2. Attachment fitting according to claim 1, characterized in that the internal face (5b) of each tongue (5) comprises at least one rib (6) extending substantially along the axis (X-X') of the shank-shaped member (1).

3. Attachment fitting according to claim 1 or 2, characterized in that the free end (5a) of each tongue (5) comprises an outer circular groove (8) and an inner chamfer (9).

4. Attachment fitting according to one of the foregoing claims, characterized in that the external periphery of the washer forms a chimney (11) of small height extending towards the open upper portion of the shank-shaped member (1).

5. Attachment fitting according to one of the foregoing claims, characterized in that the cup (4) formed an the end portion (3) is provided with an axial opening (12) either or not opening outwards of the shank-shaped member (1).
